# EUROPÄISCHE PATENTSCHRIFT

(11) **EP 2 584 299 B1**
(45) Veröffentlichungstag und Bekanntmachung des Hinweises auf die Patenterteilung: **20.02.2019**
(21) Anmeldenummer: 12189219.4
(22) Anmeldetag: 19.10.2012
(51) Int. Cl.: F27B 9/30, F27B 9/40, F27D 17/00, C04B 35/632, C04B 38/06, C04B 33/13

(54) **Aufwärmverfahren und Brennofen**
Warming method and furnace
Procédé de chauffage et four de combustion

(30) Priorität: 20.10.2011 DE 102011054640
(43) Veröffentlichungstag der Anmeldung: 24.04.2013
(73) Patentinhaber: Hans Lingl Anlagenbau und Verfahrenstechnik GmbH & Co. KG, 86381 Krumbach (DE)
(72) Erfinder: Reschke, Wolfe Hasso Dr., 87739 Breitenbrunn (DE)
(74) Vertreter: Ernicke, Klaus Stefan

(56) Entgegenhaltungen:
- EP-A2- 0 176 071
- DE-A1- 3 632 918
- US-A- 3 947 237

## Beschreibung

Die Erfindung betrifft ein Aufwärmverfahren und einen Brennofen, insbesondere einen Tunnelofen, für keramische Güter mit brennbaren Zuschlagstoffen mit den Merkmalen im Oberbegriff des Verfahrens- und Vorrichtungshauptanspruchs.

Aus der DE 40 13 505 C1 ist es bekannt, in einem mehrzonigen Tunnel-Brennofen keramisches Brenngut aufzuwärmen, zu brennen und anschließend abzukühlen. Wenn das keramische Brenngut brennbare oder vergasbare Bestandteile oder Zuschlagstoffe enthält, werden diese beim Aufwärmen entgast und von einer eingangsseitigen Absaugeinrichtung aus dem Tunnel oder Kanal abgesaugt. Diese Gase, die giftige Kohlenwasserstoffverbindungen enthalten können, werden nach dem Absaugen durch einen Absorber geführt und ggf. oxidiert sowie als Abluft abgegeben. Bei dieser Technik steht der Entsorgungsgedanke im Vordergrund. Sie funktioniert, so lange der Anteil der brenn- oder vergasbaren Zuschlagstoffe unterhalb eines kritischen energetischen Grenzwertes ist.

Die DE 23 57 057 A1 offenbart eine Luftmengenregelung in einem Tunnelofen, um die Luftmenge an die Art und Dichte des Brennbesatzes anzupassen. In der Vorwärm- und Kühlzone werden Temperaturen gemessen, wobei durch Vergleich mit Vorgängerprozessen auf eventuelle Besatzänderungen rückgeschlossen und dementsprechend die Luftmengenzugabe nachgeführt wird.

Die AT 380 869 B befasst sich mit der Ausdampfen eines Thermoplastanteils aus keramischen Formkörpern in einem Ofen, wobei der Anteil des Thermoplasts im Trägergas am Ofenausgang mittels eines Flammenionisationsdetektors (FID) gemessen wird. Hierüber wird der Kohlenwasserstoffgehalt im Abluftanteil bestimmt, der ein direktes Maß für die Abdampfrate ist.

Die US 2003/ 0 151 155 A1 betrifft das Brennen von porösen Keramikstrukturen mit kohlenstoffhaltigen Zuschlagsstoffen, wobei die Temperaturentwicklung der Befeuerungsumgebung mit der Temperaturentwicklung im Innenbereich der Formlinge mittels direkter Temperaturmessung im Innenbereich oder über Probebrennungen synchronisiert wird. Zudem wird der Kohlenstoffgehalt im Brenngut durch gezielte Zugaben genau eingestellt und hierüber das Verbrennungsverhalten beeinflusst.

Die EP 0 036 748 A1 zeigt einen Tunnelofen mit Abgasrückführung zum Aufwärmen und Brennen von kohlenstoffhaltigen Keramikmassen. Hierbei sollen die Keramikmassen möglichst schnell und vollständig entkohlt werden, um den Entkohlungsprozess vor Erreichen einer Grenztemperatur abzuschließen. Zu diesem Zweck wird die Entkohlung durch Zugabe von reinem Sauerstoff oder von mit Sauerstoff angereicherter Luft beschleunigt. An der Tunneldecke ist ein Messgerät für die Sauerstoffkonzentration angeordnet, wobei die Sauerstoffzufuhr in Abhängigkeit von der gemessenen Konzentration erfolgt.

Die EP 0 176 071 A befasst sich mit einem Brennverfahren und einem Brennofen für ein anderes unempfindliches Brenngut in Form von carbonhaltigen Elektroden, wobei in einer Brennzone mit Brennern und mittels einer per Abgasanalysator gesteuerten Außenluftzuführung die flüchtigen Substanzen aus dem Brenngut vollständig verbrannt werden. Das Abgas aus der Brennzone wird in eine vorgeschaltete Aufwärmzone unkontrolliert zurückgeführt und dort als ausschließliche Wärmeenergiequelle benutzt, wobei in der Aufwärmzone ein ungeregelter Aufwärmprozess stattfindet.

Es ist Aufgabe der vorliegenden Erfindung, eine Aufwärmtechnik aufzuzeigen, die auch für keramisches Brenngut mit einem höheren und ggf. auch variierenden Anteil von brennbaren Zuschlagstoffen geeignet ist.

Die Erfindung löst diese Aufgabe mit den Merkmalen im Verfahrens- und Vorrichtungshauptanspruch.
Die in den Zuschlagstoffen enthaltene innere Energie kann für den Aufwärmprozess anteilig und zusammen mit der Primärenergie, insbesondere mit Abgaswärme aus dem Brennprozess, eingesetzt werden. Die Energiebilanz kann optimiert werden.

Dabei kann durch die Detektion des Brennverhaltens der Aufwärmprozess und insbesondere der Temperaturverlauf im Brenngut beim Aufwärmprozess optimal gesteuert und geregelt werden. Der Temperaturgradient kann sich nach den Erfordernissen des keramischen Grundmaterials richten, welches vorzugsweise aus Ton oder Lehm besteht. Hierbei kann durch eine optimierte Temperaturkurve ein Auftreten von Rissen oder anderen Beschädigungen des Brennguts vermieden werden.

Die in den Zuschlagstoffen enthaltene und beim Aufwärmen durch Verbrennung oder dgl. frei werdende innere Energie kann temperaturgerecht optimal und kontrolliert verwertet werden, sodass die vorgegebene Temperaturkurve beibehalten werden kann. Beim Aufwärmen wird durch kontrollierte Verbrennung nur soviel innere Energie freigesetzt und in Wärme umgewandelt, wie für den Aufwärmprozess nützlich ist. Ein unkontrolliertes Verbrennen von Zuschlagstoffen und eine dadurch entstehende unerwünscht große Temperaturerhöhung mit negativen Auswirkungen für das keramische Brenngut können vermieden werden.

Insbesondere kann erreicht werden, dass beim Aufwärmen zunächst nur die leicht löslichen bzw. brennbaren Bestandteile der Zuschlagstoffe, ggf. in beschränkter Menge, kontrolliert entzünden und verbrennen und die anderen Bestandteile unverbrannt in der Grundmasse verbleiben und ggf. verkoken. Sie verbrennen erst in einem späteren Stadium des Gesamtprozesses und können dabei insbesondere den Brennprozess noch unterstützen. Dies kann z.B. die schwer flüchtigen Komponenten, insbesondere langkettigen Kohlenwasserstoffverbindungen, von Zuschlagstoffen betreffen, die erst bei höheren Temperaturen sich entzünden und verbrennen. Die Nutzung der in den Zuschlagstoffen enthaltenen inneren Energie kann dadurch optimal auf unterschiedliche Prozessstadien aufgeteilt werden.

Eine kontrollierte Verbrennung der Zuschlagstoffe in der Aufwärmzone kann auf unterschiedliche Weise erreicht werden, z.B. über die Steuerung bzw. Regelung des verfügbaren Sauerstoffgehalts und/oder durch Kühlung und/oder durch dgl. andere geeignete Massnahmen. Unerwünschte spontane Verbrennungen können detektiert und eingedämmt werden, z.B. durch eine Verknappung des Sauerstoffangebots, insbesondere im Aufwärmbereich zwischen vorzugsweise endseitigen Absaugstellen der Aufwärmzone oder eines Zonenteilbereichs. Über unterschiedliche Absaugstellen kann Abgas mit unterschiedlicher Temperatur und ggf. unterschiedlichem Sauerstoffgehalt entnommen und für die Sauerstoffverknappung sowie für die Temperaturführung bei der Regelung des Aufwärmprozesses eingesetzt werden. Vorzugsweise findet die Regelung in einem Teilbereich der Aufwärmzone statt, in dem eine Temperatur von bis zu ca. 500 °C, vorzugsweise ca. 200° bis 300°C herrscht, bei der die Gefahr eines unkontrollierten Verbrennens der Zuschlagstoffe besonders groß ist. Hier wird bevorzugt das Brennverhalten der Zuschlagstoffe detektiert und danach der Aufwärmprozess geregelt.

Der Tunnelofen kann somit mit ausreichend hohem Abgasvolumenstrom zur Nutzung der Energie des von der Brennzone kommenden Abgasstroms bei gleichzeitiger Kontrolle des Sauerstoffgehalts zur kontrollierten Verbrennung der Zuschlagstoffe betrieben werden.

Die beanspruchte Technik hat mehrere Vorteile. Einerseits kann der Einsatz an Primärenergie reduziert werden und das vorhandene Energieangebot besser und v.a. optimal ausgenutzt werden. Andererseits kann die Menge an Zuschlagstoffen erhöht werden und kann ggf. auch variieren, was zu Entsorgungs- und Wiederverwertungszwecken sowie zur Porenbildung im Keramikgut vorteilhaft ist. Zudem lässt sich die Produkt- und Brennqualität steigern, was insbesondere bei hochwertigen wärmedämmenden Tonziegeln mit einem hohen Lochanteil von Vorteil ist.

Ein weiterer besonderer Vorteil liegt in der Variationsmöglichkeit von Art, Menge und insbesondere Energiegehalt der Zuschlagstoffe. Die Zuschlagstoffe können Füllstoffe zur Porenbildung. Abfall- und Energieverwertung sein. Sie können auch Zusatzfunktionen haben, z.B. als Hilfsmittel beim Press- und Formprozess oder dgl.. Ein Brennguthersteller, insbesondere ein Ziegelhersteller, kann die verwendeten brennbaren Zuschlagstoffe nach Art und Menge mit höherem Freiheitsgrad wählen und dabei nach Preis, Verfügbarkeit, innerem Energiegehalt etc. entscheiden. Besonders günstig ist hierbei die erreichbare Wirtschaftlichkeit. Die in den Zuschlagstoffen enthaltene innere Energie kann für den Gesamtprozess, insbesondere den Aufwärmprozess, bestmöglich genutzt werden, was eine Reduzierung des Primärenergieeinsatzes erlaubt. Andererseits ist eine bedarfsgerechte Produktion von Brenngut möglich, auch in mengenmäßiger Hinsicht. Die Brennchargen können beliebig groß sein und können in vollem Umfang verwendet und verwertet werden.

Diese Vorteile kommen v.a. in Verbindung mit variierenden Zuschlagstoffen zum Tragen. Der Prozess kann sich innerhalb des zulässigen Prozessfensters nach den vorhandenen Bedingungen einstellen und selbst regeln. Es ist nicht erforderlich, dass vor dem Brennen aufwändige Analysen der Zuschlagstoffe hinsichtlich Energiegehalt, Brennverhalten oder dgl. durchgeführt werden. Entsprechend variabel und kostengünstig ist der Einsatz von Zuschlagstoffen. Dies erlaubt auch eine Anpassung an die jeweiligen Porositätsanforderungen des Brennguts.

Vorzugsweise wird beim Aufwärmen die Ofenluft lokal an einer oder mehreren Stellen in der Aufwärmzone, insbesondere in dem vorgenannten Zonenteilbereich, in Axialrichtung umgewälzt. Die Umwälzung kann in einem Bereich zwischen Absaugstellen erfolgen. Günstig ist auch eine Umwälzung der Ofenluft in einem Deckenbereich der Aufwärmzone. Für den Prozess ist es außerdem von Vorteil, wenn bei der Umwälzung Abgas zugeführt wird.

Die beanspruchte Technik erlaubt einen optimierten Einsatz der vorhandenen Energieressourcen. Insbesondere wird nur so viel Abfallenergie in der Abluft abgegeben, wie unumgänglich ist.

Günstig ist ferner die Wirtschaftlichkeit des Verfahrens und der Vorrichtung. Der Bau- und Steueraufwand ist gering. Andererseits ist die Breite der Regelungs- und Anpassungsmöglichkeiten an unterschiedlichste Zuschlagstoffe maximal.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: einen Brennofen in Tunnelbauweise mit mehreren Zonen und einer Regeleinrichtung in einem schematischen Längsschnitt,
- Figur 2:: ein Schemadiagramm eines Temperaturverlaufs im Tunnelofen und im Brenngut,
- Figur 3:: eine abgebrochene schematische Draufsicht auf einen Teil einer Aufwärmzone des Tunnelofens mit Absaug-, Zuführ- und Umwälzeinrichtungen und eine Regeleinrichtung,
- Figur 4:: ein zugehöriges Schemadiagramm für eine Temperaturkurve und
- Figur 5:: eine Schemaansicht eines keramisches Formlings mit Lochung und Zuschlagstoffen.

Die Erfindung betrifft ein Verfahren zum Aufwärmen von keramischem Brenngut (2) mit brennbaren Zuschlagstoffen (5) in einem Brennofen (1). Die Erfindung kann ferner auch den anschließenden Brennprozess sowie den Gesamtprozess betreffen. Sie betrifft außerdem den Brennofen (1).

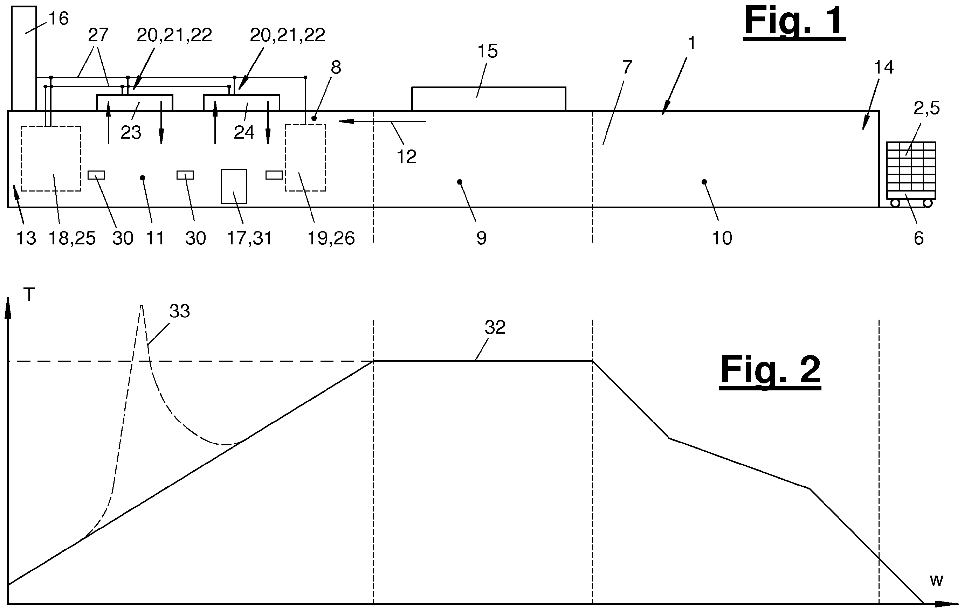

Figur 1 zeigt in einem schematischen Längsschnitt beispielhaft den Aufbau eines Brennofens (1), der mehrere hintereinander aufgereihte Zonen (8,9,10) sowie einen Kanal (7) mit einem Einlass (13) und einem Auslass (14) aufweist. Am Einlass (13) kann eine Ablufteinrichtung (16) angeordnet sein, mit der Abgase aus dem Brennprozess abgegeben oder ggf. einer Nachbereitung zugeführt werden können. Der Brennofen (1) kann z.B. als Tunnelofen gestaltet sein, durch dessen Kanal (7) das Brenngut (2) auf Fördermitteln (6) in einer oder mehreren Reihen in Längsrichtung (34) hindurchtransportiert wird. Es wandert hierbei durch mehrere Zonen (8,9,10) mit zunächst steigender und dann wieder fallender Temperatur und unterliegt z.B. der in Figur 2 gezeigten Temperaturkurve (32). Die Zonen gliedern sich z.B. in eine eingansseitige Aufwärmzone (8), eine nachfolgende Brennzone (9) und eine endseitige Abkühlzone (10).

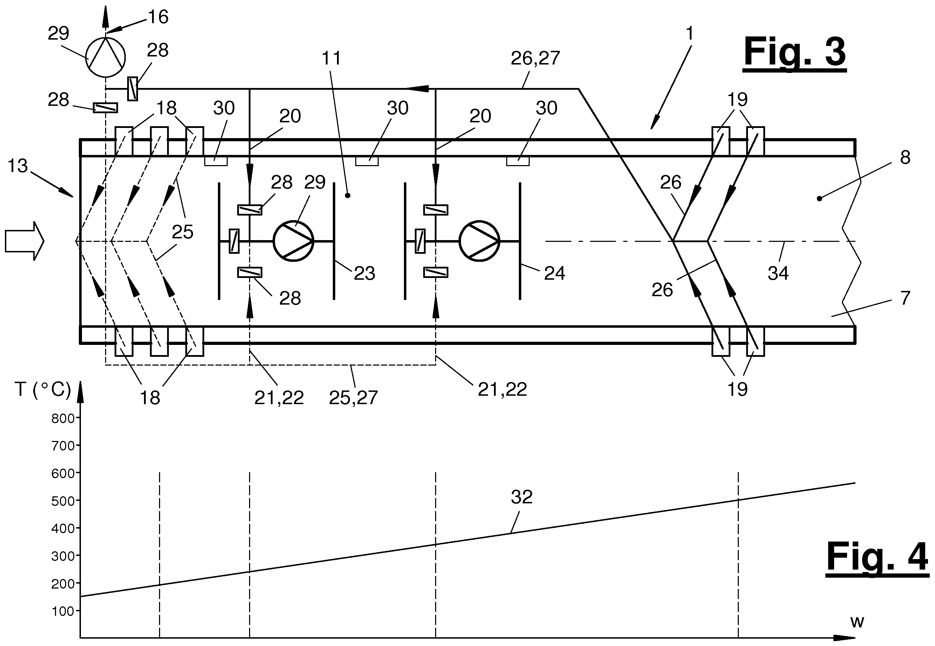

Das Brenngut (2) besteht z.B. aus keramischen Formlingen und kommt von einer Formeinrichtung mit nachgeordneter Trockeneinrichtung. Es kann Umgebungstemperatur oder eine erhöhte Temperatur von z.B. bis zu ca. 100°C haben. In der Aufwärmzone wird das Brenngut (2) kontrolliert in einer Temperaturkurve (32) gemäß Figur 2 und 4 bis auf eine Brenntemperatur aufgewärmt, welche z.B. ca. 900 °C oder mehr betragen kann.

Der Aufwärmprozess wird nachfolgend näher beschrieben. Das Brennen in der Brennzone (9) kann mittels einer Heizeinrichtung (15) unter Einsatz von Primärenergie erfolgen. Diese kann z.B. gasbetriebene steuerbare Brenner, insbesondere zündgesicherte Hochgeschwindigkeitsbrenner, oder dgl. anderen geeignete Heizgeräte aufweisen. Das Abkühlen in der Kühlzone (10) kann mit Umgebungsluft oder anderen geeigneten Kühlmitteln erfolgen.

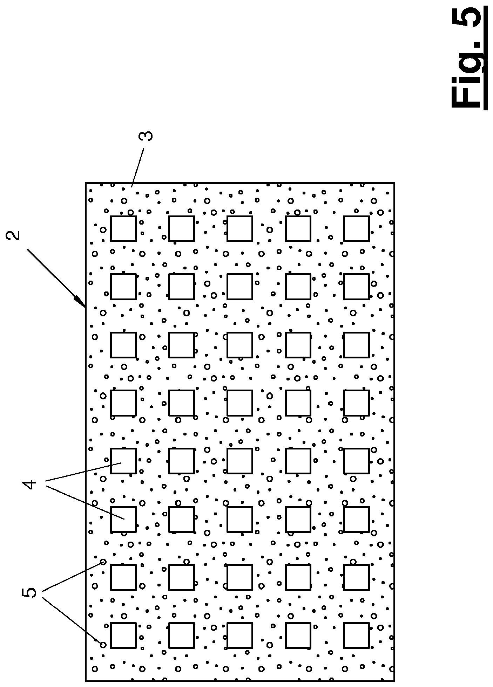

Figur 5 zeigt beispielhaft ein Brenngut (2) in Form eines keramischen Formlings. In der gezeigten Ausführungsform handelt es sich um einen Ziegel mit einer Lochung (4) und zusätzlichen Poren. Der keramische Formling (2) besteht aus einer keramischen Grundmasse (3) und darin verteilt angeordneten Zuschlagstoffen (5), die aus einem brennbaren oder unter Wärmeabgabe vergasbaren Material bestehen. Die Grundmasse (3) kann z.B. aus Ton, Lehm oder dgl. natürlichen Grundmaterialien oder aus einem anderen geeigneten Keramikmaterial, z.B. einem technischen Keramikmaterial bestehen. Die Zuschlagstoffe (5) können verteilt und in Korn- oder Tropfenform oder dgl. vorliegen. Sie können aus den unterschiedlichsten brennbaren Materialien, z.B. aus Öl, granulierten Reifenresten, Holz- oder Papierpartikeln, Wachsen, Glycerin oder anderen Bindemitteln zur Unterstützung der Ziegelformung oder dgl. bestehen.

Beim Aufwärmprozess und ggf. auch beim Brennprozess verbrennen die Zuschlagstoffe (5) und bilden Poren im keramischen Formling (2). Ziegel der gezeigten Art werden nach der Rohdichte verkauft. Sie beinhalten einen aus dem Formprozess und der Matrize vorgegebenen Lochanteil (4), der z.B. 50% des Rohvolumens bzw. des Ziegels beträgt. Wenn der Lochanteil größer und die Rohdichte geringer werden soll, wird dies über eine Erhöhung des Porenanteils und damit letztendlich über die Art, Größe und Verteilung der Zuschlagstoffe (5) erreicht.

Figur 2 zeigt beispielhaft und schematisch eine Temperaturkurve (32) im Tunnelofen (1) sowie entsprechend auch im Brenngut (2). Figur 4 verdeutlicht den Bereich der Temperaturkurve (32) in der Aufwärmzone (8). Die Vorgabe der Temperaturkurve (32), insbesondere der Gradient bzw. die Steigung in der Aufwärmzone (8), kann sich nach den Erfordernissen der keramischen Grundmasse (3) richten, um z.B. eine gleichmäßige Durchwärmung zu erreichen und Spannungsrisse zu vermeiden.

Beim Aufwärmprozess in der Aufwärmzone (8) wird Wärmeenergie aus Abgasen des Brennprozesses und aus einer zumindest teilweisen Verbrennung der Zuschlagstoffe (5) gemeinsam genutzt. Bei dem gezeigten Tunnelofen (1) können die Abgase aus der Brennzone (9) in einem Abgasstrom oder Gegenstrom (12) innerhalb oder ggf. außerhalb des Kanals (7) gegen die Transportrichtung des Brennguts (2) zur Eingasseite (13) geführt werden. Die Abgase aus dem Brennprozess haben einen verminderten Sauerstoffgehalt und eine hohe Temperatur von z.B. ca. 500°C oder mehr beim Eintritt in die Aufwärmzone (8). Sie kühlen sich unter Wärmeabgabe am Brenngut (2) ab. Der Abgasstrom (12) wird z.B. durch die Ablufteinrichtung (16) und eine zumindest einlassseitige Kanalabsaugung erzeugt.

Die Verbrennung von Zuschlagstoffen (5) in der Aufwärmzone (8) kann teilweise erfolgen, wobei insbesondere die bei niedrigeren Temperaturen von z.B. ca. 200 bis 300 °C flüchtigen oder brennbaren Komponenten kontrolliert verbrennen und die restlichen Komponenten, insbesondere die langkettigen Kohlenwasserstoffverbindungen, verkoken und im Brenngut (2) bleiben. Sie werden erst in einem späteren Prozessstadium und bei höheren Temperaturen am Ende der Aufwärmzone (8) oder in der Brennzone (9) verbrannt und geben dann ihre Energie zur Prozessunterstützung ab.

Beim Aufwärmen in der Aufwärmzone (8) wird das Brennverhalten der Zuschlagstoffe (5) mittels einer Detektionseinrichtung (30) detektiert und danach der Aufwärmprozess durch eine Regeleinrichtung (31) geregelt. Die Regeleinrichtung (31) kann eigenständig ausgebildet und angeordnet sein oder kann Bestandteil einer übergeordneten Steuerung (17) des Brennofens (1) sein. Die Regelung kann in der gesamten Aufwärmzone (8) oder vorzugsweise in einem Zonenteilbereich (11) erfolgen, in dem Temperaturen bis ca. 500 °C, vorzugsweise von 200 bis 300 °C herrschen.

Der Aufwärmprozess kann in der Aufwärmzone (8) bzw. im Zonenteilbereich (11) z.B. über eine Steuerung des dortigen Sauerstoffgehalts und/oder der dortigen Temperatur geregelt werden. Die Beeinflussung des Sauerstoffgehalts und/oder der Temperatur kann z.B. durch eine gesteuerte Führung von Abgasen (25,26) aus dem Abgasstrom (12) erfolgen, wobei die Abgase (25,26) an unterschiedlichen Absaugstellen (18,19) dem Abgasstrom (12) entnommen werden und dabei unterschiedliche Temperaturen sowie ggf. einen unterschiedlichen Sauerstoffgehalt haben. Die Abgasströme (25,26) können getrennt geführt und bedarfsweise gemischt werden, wobei über eine oder mehrere Zuführungen (20,21) Abgas (25,26) mit der geeigneten Temperatur und ggf. mit dem geeigneten Sauerstoffgehalt der Aufwärmzone (8) bzw. dem Zonenteilbereich (11) zwischen den Absaugstellen (18,19) wieder zugeführt werden kann. Dem zugeführten Abgas kann bedarfsweise auch Frischluft zur Kühlung und/oder Sauerstoffanreicherung über eine weitere Zuführung (22) beigegeben werden.

In den Zeichnungen ist eine beispielhafte Ausgestaltung eines für dieses Verfahren geeigneten Tunnelofens (1) dargestellt.

Figur 1 zeigt in einer Seitenansicht schematisch die gesamte Aufwärmzone (8). In Figur 3 ist der vorgenannte Zonenteilbereich (11) ausschnittsweise und in einer Draufsicht schematisch dargestellt. Hieran kann sich ein weiterer Teil der Aufwärmzone (8) anschließen. Der Teilbereich (11) kann sich in einer anderen Ausführungsform auch über die gesamte Aufwärmzone (8) erstrecken. In der gezeigten Ausführungsform reicht der Teilbereich (11) vom Einlass (13) bis zu einer Stelle in der Aufwärmzone (8), in der die permanent ansteigende Temperatur im Kanal (7) ca. 400 bis 500 °C erreicht hat.

An der Eingangsseite des Zonenteilbereichs (11) nahe am Einlass (13) befindet sich eine erste Absaugstelle (18) mit einer entsprechenden Absaugeinrichtung, die Ofenluft und darin enthaltenes Abgas (25) aus dem Kanal (7) in geeigneter Weise entnimmt. Hierfür können z.B. in Längsrichtung hintereinander mehrere Absaugöffnungen an der Kanalwandung, z.B. je drei Absaugöffnungen an den beiden Seitenwänden, vorhanden und über Leitungen (27) mit einem geeigneten Fördermittel (29), z.B. einer an der Ablufteinrichtung (16) angeordneten Pumpe, verbunden sein. Die z.B. vertikalen schlitzartigen Absaugöffnungen können an die Brennschlitze im Brenngut (2) angepasst sein.

Die Absaugleitungen von den mehreren Absaugöffnungen können zu einer Sammelleitung zusammengeführt sein, die einerseits mit der Ablufteinrichtung (16) unter Zwischenschaltung eines steuerbaren Verschlusses (28), z.B. einer steuerbaren Klappe, verbunden ist. Die Sammelleitung kann andererseits mit einer oder mehreren Zuführungen (21,22) verbunden sein, wobei hier ebenfalls ein oder mehrere steuerbare Verschlüsse (28) der vorbeschriebenen Art angeordnet sein können. Das an der Absaugstelle (18) entnommene Abgas (25) kann eine relativ niedrige Temperatur von z.B. ca. 150 °C aufweisen. Es kann über die Leitungen (27) außerhalb des Kanals (7) bzw. am Brenngut (2) vorbei in Förderrichtung transportiert und an einer Stelle der Aufwärmzone (8) bzw. dem Zonenteilbereich (11) und dem Brenngut (2) wieder zugeführt werden, an der eine höhere Temperatur als an der Absaugstelle (18) herrscht.

Am auslassseitigen Ende des Zonenteilbereichs (11) ist eine weitere Absaugstelle (19) angeordnet, an der Abgas (26) mit einer höheren Temperatur von z.B. 400 bis 500 °C aus dem Abgasstrom (12) entnommen wird. Die Absaugstelle (19) ist in Förderrichtung von der ersten Absaugstelle (18) distanziert. Die zugehörige Absaugeinrichtung (19) kann ähnlich wie die vordere Absaugeinrichtung (19) ausgebildet sein und weist z.B. jeweils zwei vertikale Absaugschlitze in den Tunnelseitenwänden in Verbindung mit Leitungen (27) auf, die ggf. zu einer Sammelleitung zusammengeführt und mit einem Fördermittel (29), z.B. an der Ablufteinrichtung (19), verbunden sind. Die Leitung (27) ist mit der Ablufteinrichtung (16) und mit einer oder mehreren Zuführungen (20) unter Einschluss von steuerbaren Verschlüssen (28) verbunden.

Das heiße Abgas (26) kann bedarfsweise am Zonenteilbereich (11) und am Brenngut (2) vorbei zur Abluft (16) geführt oder vollständig oder teilweise in den Zonenteilbereich (11) über eine oder mehreren Zuführungen (20) wieder eingespeist werden. Die Mengensteuerung wird über die Verschlüsse (28) vorgenommen. An der Einspeisestelle ist die Ofen- und Gegenstromtemperatur niedriger als die Abgastemperatur, so dass die Zuführung eine lokale Aufheizung des Brennguts (2) bewirken werden kann.

Die entnommenen unterschiedlich temperierten Abgase (25,26) können wahlweise einzeln oder gemischt dem Zonenteilbereich (11) wieder zugeführt werden. Hierbei kann die zugeführte Gastemperatur auf das zur Prozessregelung gewünschte Maß eingestellt werden. Insbesondere kann durch eine Einspeisung des kälteren Abgases (25) eine lokale Tempertatursenkung und Kühlung des Brennguts (2) erreicht werden, die ein Entzünden und Verbrennen der schwerer löslichen Komponenten der Zuschlagstoffe (5) verhindert und deren Verkokung unterstützt.

Wenn an der in Förderrichtung vorderen Absaugstelle (19) Abgas (26) aus dem Gegenstrom (12) entnommen und am Brenngut (2) vorbei zur Abluft (16) geführt wird, wird der Sauerstoffgehalt im Zonenteilbereich (11) entsprechend der Luftmengenreduzierung gemindert. Außerdem kühlt sich der restliche Gegenstrom (12) schneller am Brenngut (2) ab. Dies kann über die Regeleinrichtung (31) gesteuert werden, die mit den Absaugeinrichtungen (18,19) und den steuerbaren Verschlüssen (28) verbunden ist.

Die Zahl und Ausbildung der Zuführungen (20,21,22) kann variieren. In der gezeigten Ausführungsform sind die Zuführungen bzw. Zuführeinrichtungen (20,21,22) mit einer oder mehreren, z.B. zwei, Umwälzeinrichtungen (23,24) verbunden. Die Umwälzeinrichtungen (23,24) sind z.B. an der Decke des Kanals (7) angeordnet und wälzen die Ofenluft in Längsrichtung (34) um. Hierfür entnehmen sie über geeignete einlassseitige Öffnungen Ofenluft, transportieren diese innerhalb oder außerhalb des Kanals (7) in Axialrichtung (34) zur Auslassseite hin und blasen sie über die Auslassöfffnungen wieder in den Kanal (7) ein. Der Lufttransport wird durch Fördermittel (29), z.B. Pumpen, bewirkt. Die Umwälzeinrichtungen (23,24) sind ihrerseits mit steuerbaren Verschlüssen (28) versehen und mit der Regeleinrichtung (31) verbunden.

Die Zuführeinrichtungen (20,21,22), die z.B. aus verschließbaren Leitungen (27) bestehen, können beidseits an die Umwälzeinrichtung(en) (23,24) angeschlossen sein. Hierüber kann wahlweise Ofenluft axial umgewälzt oder kälteres oder heißeres Abgas (25,26) eingespeist werden. Durch geeignete Steuerung der Verschlüsse (28) kann auch eine Mischung von kaltem und heißem Abgas (25,26) stattfinden. Ferner kann die axiale Umwälzung gesperrt und nur Abgas (25,26) in geeigneter Mengendosierung einzeln oder in Mischung über die Umwälzeinrichtung (23,24) in den Kanal (7) eingespeist werden. Die Umwälzung kann auch mit der Abgaseinspeisung der vorgenannten Art kombiniert werden. Über die Steuerung und ggf. Mischung der Abgasmengen (25,26) kann die Temperatur und die Menge des zugeführten Abgases eingestellt werden. Die Umwälzeinrichtung(en) (23,24) sind ebenfalls an die Regeleinrichtung (31) angeschlossen.

Im Zonenteilbereich (11) ist eine mit der Regeleinrichtung (31) verbundene Detektionseinrichtung (30) für das Brennverhalten der Zuschlagstoffe (5) angeordnet. Diese kann einteilig oder mehrteilig ausgebildet sein und kann an einer oder mehreren Stellen angeordnet sein. Die Detektionseinrichtung (30) kann in beliebig geeigneter Weise ausgebildet sein. Sie kann z.B. eine Messeinrichtung für die Temperatur der Ofenluft im Messbereich aufweisen, wobei eine Einzel- oder Mehrfachanordnung möglich ist. Alternativ oder zusätzlich zur Temperaturmessung kann eine ggf. mehrfach vorhandene Messeinrichtung für den Sauerstoffgehalt in der Ofenluft an den ein oder mehreren Messstellen vorhanden sein.

Das Brennverhalten der Zuschlagstoffe können über eine Temperaturmessung und/oder eine Messung des Sauerstoffgehalts, insbesondere eine Sauerstoffverringerung, erfasst werden. Wenn eine zu große Menge von leicht brennbaren Komponenten in den Zuschlagstoffen (5) verbrennt und ggf. über eine lokale Temperaturerhöhung ein Entzünden und Verbrennen der anderen schwerer entzündlichen Komponenten nach sich zieht, könnte dies insgesamt zu einem Temperatur-Peak (33) führen, der beispielhaft in Figur 2 gestrichelt dargestellt ist. Ein solches unkontrolliertes Brennverhalten kann durch die Detektionseinrichtung (30) rechtzeitig vor Ausformung eines Peaks (33) erfasst und über die Regeleinrichtung (31) eingedämmt werden. Diese verknappt z.B. in der vorbeschriebenen Weise die Luftmenge und damit das Sauerstoffangebot im betroffenen Zonenteilbereich (11) am Brenngut (2) und verhindert oder verlangsamt die weitere Verbrennung der Zuschlagstoffe (5). Die Regeleinrichtung (31) sorgt dafür, dass die Temperaturkurve (32) in den verschiedenen Abschnitten der Aufwärmzone (8), insbesondere des Teilbereichs (11) eingehalten wird. Sie steuert dabei die Verbrennung der Zuschlagstoffe (5) und die Zufuhr von Sauerstoff und Wärmeenergie aus dem Gegenstrom (12) und den Abgasen (25,26) .

Die Regeleinrichtung (31) kann sich dabei auf die in den Zuschlagstoffen (5) enthaltene und bei einer Verbrennung oder dgl. frei werdende innere Energie selbsttätig einstellen. Wenn Zuschlagstoffe (5) in großer Menge und/oder mit hohem Energiegehalt verwendet werden, ist der hieraus gewonnene Energieanteil an der zur Erzeugung der Temperaturkurve (32) erforderlichen Gesamtenergie größer als in anderen Fällen. Dementsprechend kleiner kann der aus dem Abgasstrom (12) verwendete Energieanteil ausfallen und dementsprechend größer ist ggf. der zur Abluft (16) abgeführte Anteil der heißen Abgase (26). Ist umgekehrt der Energiegehalt der Zuschlagstoffe (5) geringer, wird ein größerer Teil der Wärmeenergie aus dem Abgasstrom (12) für den Aufwärmprozess verwendet.

Andererseits kann bei einer kontrollierten und beschränkten Verbrennung von Teilen der Zuschlagstoffe (5) in der Aufwärmzone (8), insbesondere im Zonenteilbereich (11), der unverbrannte und ggf. nur verkokte Rest der Zuschlagstoffe (5) für spätere Prozessstadien im Tunnelofen (1) aufgehoben und dort erst verbrannt werden, z.B. bei höheren Temperaturen am auslassseitigen Ende der Aufwärmzone (8) und/oder in der Brennzone (9). Dementsprechend kann ggf. der Einsatz von Primärenergie, insbesondere in der Brennzone (9), verringert werden.

Abwandlungen der gezeigten und beschriebenen Ausführungsform sind in verschiedener Weise möglich. Die Zahl der Absaugstellen (18,19) kann größer als zwei sein. Desgleichen kann die Zahl der Umwälzeinrichtungen (23,24) variieren. Es können nur eine, drei oder mehr Umwälzeinrichtungen (23,24) vorhanden sein. Umwälzeinrichtungen (23,24) können alternativ entfallen, wobei die ein oder mehreren Zuführeinrichtungen (20,21,22) entsprechend anders ausgebildet sind. Auch die Zahl der Zuführeinrichtungen (20,21,22) kann variieren. Sie kann eins, drei oder mehr betragen.

Die Absaugung der Abgase (25,26) ist eine bevorzugte Ausführungsform für die Gasentnahme aus dem Gegenstrom (12), die auch auf andere Weise realisiert werden kann.

Die Steuerung des Brennverhaltens der Zuschlagstoffe (5) kann alternativ oder zusätzlich zu den vorbeschriebenen Ausführungsbeispielen auf andere Weise erfolgen. Die Verbrennung bzw. das Sauerstoffangebot kann z.B. durch eine lokale Stoffzugabe, insbesondere durch ein inertes Gas, beeinflusst werden. Ferner können andere Kühlmittel eingesetzt werden.

### BEZUGSZEICHENLISTE

- 1: Brennofen, Tunnelofen
- 2: Brenngut, keramischer Formling
- 3: Grundmasse keramisch
- 4: Lochung
- 5: Zuschlagstoff
- 6: Fördermittel
- 7: Kanal
- 8: Ofenzone, Aufwärmzone
- 9: Ofenzone, Brennzone
- 10: Ofenzone, Abkühlzone
- 11: Teilbereich der Aufwärmzone
- 12: Abgasstrom, Gegenstrom
- 13: Einlass
- 14: Auslass
- 15: Heizeinrichtung
- 16: Abluft, Ablufteinrichtung
- 17: Steuerung
- 18: Absaugeinrichtung, Absaugstelle
- 19: Absaugeinrichtung, Absaugstelle
- 20: Zuführeinrichtung Heißluft
- 21: Zuführeinrichtung temperierte Luft
- 22: Zuführeinrichtung Frischluft
- 23: Umwälzeinrichtung
- 24: Umwälzeinrichtung
- 25: Abgas heiß
- 26: Abgas temperierte
- 27: Leitung
- 28: Verschluss, Klappe
- 29: Fördermittel, Pumpe
- 30: Detektionseinrichtung
- 31: Regeleinrichtung
- 32: Temperaturkurve
- 33: Peak
- 34: Längsachse Brennofen

## Patentansprüche

1. Verfahren zum Aufwärmen von keramischem, vorzugsweise ton- oder lehmhaltigem Brenngut (2) mit brennbaren Zuschlagstoffen (5) vor dem anschließenden Brennen in einem Brennofen (1), der in mehrere unterschiedlich temperierte Zonen (8,9,10) unterteilt ist, wobei die Wärmeenergie zum Aufwärmen des Brennguts (2) in einer Aufwärmzone (8) aus einem von einer Brennzone (9) zurückgeführten Abgasstrom (12) und aus den Zuschlagstoffen (5) gewonnen wird und wobei beim Aufwärmen das Brennverhalten der Zuschlagstoffe (5) detektiert und danach der Aufwärmprozess geregelt wird.

2. Verfahren nach Anspruch 1, **dadurch gekennzeichnet, dass** der Aufwärmprozess nach einer vorgegebenen Temperaturkurve (32) des Brennguts (2) geregelt wird.

3. Verfahren nach Anspruch 1 oder 2, **dadurch gekennzeichnet, dass** der Aufwärmprozess in der Aufwärmzone (8), insbesondere in einem Zonenteilbereich (11), über eine kontrollierte Verbrennung der Zuschlagstoffe (5) geregelt wird.

4. Verfahren nach Anspruch 1, 2 oder 3, **dadurch gekennzeichnet, dass** beim geregelten Aufwärmprozess ein Teil der Zuschlagstoffe (5) verbrannt wird, wobei der unverbrannte Teil der Zuschlagstoffe (5) in einem späteren Prozessstadium, insbesondere in der Brennzone (9), verbrannt wird.

5. Verfahren nach einem der vorhergehenden Ansprüche, **dadurch gekennzeichnet, dass** der Aufwärmprozess in der Aufwärmzone (8), insbesondere in einem Zonenteilbereich (11), über eine Steuerung des dortigen Sauerstoffgehalts und/oder der dortigen Temperatur geregelt wird.

6. Verfahren nach einem der vorhergehenden Ansprüche, **dadurch gekennzeichnet, dass** der Aufwärmprozess in der Aufwärmzone (8), insbesondere in einem Zonenteilbereich (11), über eine dortige Zuführung (20,21) von Abgasen (25,26) mit unterschiedlichen Sauerstoffgehalten und/oder mit unterschiedlichen Temperaturen geregelt wird.

7. Verfahren nach einem der vorhergehenden Ansprüche, **dadurch gekennzeichnet, dass** an mehreren unterschiedlichen Stellen (18,19), vorzugsweise an Anfang und Ende der Aufwärmzone (8), insbesondere eines Zonenteilbereichs (11), verschieden temperierte Abgase (25,26) abgesaugt werden, wobei die abgesaugte Abgasen (25,26) abgeführt und/oder zwischen den Absaugstellen (18,19) in der Aufwärmzone (8), insbesondere in einem Zonenteilbereich (11), zugeführt (20,21) werden.

8. Verfahren nach einem der vorhergehenden Ansprüche, **dadurch gekennzeichnet, dass** das Brennverhalten der Zuschlagstoffe (5) beim Aufwärmen durch Erfassung der Temperatur und/oder des Sauerstoffgehalts detektiert wird.

9. Verfahren nach einem der vorhergehenden Ansprüche, **dadurch gekennzeichnet, dass** beim Aufwärmen die Ofenluft lokal an einer oder mehreren Stellen in der Aufwärmzone (8), insbesondere in einem Zonenteilbereich (11), in Axialrichtung umgewälzt (23,24) wird.

10. Brennofen, insbesondere Tunnelofen, geeignet zur Durchführung des Verfahrens nach einem der Ansprüche 1-9, mit mehreren unterschiedlich temperierten Zonen (8,9,10), insbesondere einer Aufwärmzone (8) und einer nachgeordneten Brennzone (9), zum Aufwärmen und Brennen von keramischem Brenngut (2) mit brennbaren Zuschlagstoffen (5), wobei die Wärmeenergie zum Aufwärmen des Brennguts (2) in der Aufwärmzone (8) aus einem von der Brennzone (9) zurückgeführten Abgasstrom (12) und aus den Zuschlagstoffen (5) erhältlich ist, wobei der Brennofen (1) in der Aufwärmzone (8) eine Detektionseinrichtung (30) zur Erfassung des Brennverhaltens der Zuschlagstoffe (5) beim Aufwärmen und eine Regeleinrichtung (31) zur Regelung des Aufwärmprozess in Abhängigkeit vom Detektionsergebnis aufweist.

11. Brennofen nach Anspruch 10, **dadurch gekennzeichnet, dass** der Brennofen (1) in der Aufwärmzone (8) mehrere axial distanzierte Absaugeinrichtungen (18,19) für unterschiedlich temperierte Abgase (25,26) aus dem zurückgeführten Abgasstrom (12), sowie eine oder mehrere steuerbare und mit einer Absaugeinrichtung (18,19) verbundene Zuführeinrichtungen (20,21,22) für abgesaugte Abgase (25,26) und ggf. für Frischluft, aufweist.

12. Brennofen nach Anspruch 10 oder 11, **dadurch gekennzeichnet, dass** der Brennofen (1) in der Aufwärmzone (8) eine oder mehrere axial wirkende, steuerbare Umwälzeinrichtungen (23,24) aufweist, die mit einer Zuführeinrichtung (20,21,22) verbunden ist/sind.

13. Brennofen nach Anspruch 10, 11 oder 12, **dadurch gekennzeichnet, dass** die Detektionseinrichtung (30) und die Zuführeinrichtung(en) (20,21,22) in einem Teilbereich (11) der Aufwärmzone (8), insbesondere mit einem Temperaturbereich bis ca. 500°C, vorzugsweise 200 - 300°C, angeordnet sind.

14. Brennofen nach einem Ansprüche 10 bis 13, **dadurch gekennzeichnet, dass** die Detektionseinrichtung (30) eine Messeinrichtung für die Temperatur und/oder den Sauerstoffgehalt der Ofenluft aufweist.

15. Brennofen nach einem Ansprüche 10 bis 14, **dadurch gekennzeichnet, dass** die Absaugeinrichtungen (18,19) über Leitungen (27) mit steuerbaren Verschlüssen (28) mit einer Zuführeinrichtung (20,21,22) und mit einer Ablufteinrichtung (16) verbunden sind, wobei die Regeleinrichtung (31) mit der Detektionseinrichtung (30), den Absaugeinrichtungen (18,19), der/den Zuführeinrichtung(en) (20,21,22) und den Verschlüssen (28) verbunden ist.

## Claims

1. Method for heating ceramic, preferably clay-containing, firing material (2) with combustible additives (5) before the subsequent firing in a furnace (1) which is subdivided into a plurality of differently temperature-controlled zones (8, 9, 10), wherein the thermal energy for heating the firing material (2) in a heating zone (8) is obtained from a waste gas stream (12) recirculated from a firing zone (9) and from the additives (5), and wherein, during the heating, the combustion behaviour of the additives (5) is detected and the heating process is regulated on this basis.

2. Method according to Claim 1, **characterized in that** the heating process is regulated in accordance with a predefined temperature curve (32) of the firing material (2).

3. Method according to Claim 1 or 2, **characterized in that** the heating process in the heating zone (8), in particular in a zone sub-region (11), is regulated via controlled combustion of the additives (5).

4. Method according to Claim 1, 2 or 3, **characterized in that** during the regulated heating process, some of the additives (5) are burned, wherein the unburned part of the additives (5) is burned in a subsequent process stage, in particular in the firing zone (9).

5. Method according to one of the preceding claims, **characterized in that** the heating process in the heating zone (8), in particular in a zone sub-region (11), is regulated via control of the oxygen content there and/or the temperature there.

6. Method according to one of the preceding claims, **characterized in that** the heating process in the heating zone (8), in particular in a zone sub-region (11), is regulated by a supply (20, 21) there of waste gases (25, 26) with different oxygen contents and/or with different temperatures.

7. Method according to one of the preceding claims, **characterized in that** at a plurality of different locations (18, 19), preferably at the start and end of the heating zone (8), in particular a zone sub-region (11), different temperature-controlled waste gases (25, 26) are extracted, wherein the extracted waste gases (25, 26) are led away and/or supplied between the extraction locations (18, 19) in the heating zone (8), in particular in a sub-region (11).

8. Method according to one of the preceding claims, **characterized in that** the combustion behaviour of the additives (5) during the heating is detected by measuring the temperature and/or the oxygen content.

9. Method according to one of the preceding claims, **characterized in that** during the heating, the furnace air is circulated locally in the axial direction (23, 24) at one or more locations in the heating zone (8), in particular in a zone sub-region (11).

10. Furnace, in particular tunnel furnace, suitable for carrying out the method according to one of Claims 1 - 9, having a plurality of differently temperature-controlled zones (8, 9, 10), in particular a heating zone (8) and a downstream firing zone (9), for heating and firing ceramic firing material (2) with combustible additives (5), wherein the thermal energy for heating the firing material (2) in the heating zone (8) is obtainable from a waste gas stream (12) recirculated from the firing zone (9) and from the additives (5), wherein the furnace (1) has a detection device (30) in the heating zone (8) for detecting the combustion behaviour of the additives (5) during the heating, and a regulating device (31) for regulating the heating process on the basis of the detection result.

11. Furnace according to Claim 10, **characterized in that** the furnace (1) has a plurality of axially spaced extraction devices (18, 19) in the heating zone (8) for differently temperature-controlled waste gases (25, 26) from the waste gas stream (12) that has been recirculated, and one or more controllable supply devices (20, 21, 22), which are connected to an extraction device (18, 19), for extracted waste gases (25, 26) and, if appropriate, for fresh air.

12. Furnace according to Claim 10 or 11, **characterized in that** the furnace (1) has one or more axially acting, controllable circulation devices (23, 24) in the heating zone (8), which is/are connected to a supply device (20, 21, 22).

13. Furnace according to Claim 10, 11 or 12, **characterized in that** the detection device (30) and the supply device (s) are arranged in a sub-region (11) of the heating zone (8), in particular with a temperature range up to about 500°C, preferably 200 - 300°C.

14. Furnace according to one of Claims 10 to 13, **characterized in that** the detection device (30) has a measuring device for the temperature and/or the oxygen content of the furnace air.

15. Furnace according to one of Claims 10 to 14, **characterized in that** the extraction devices (18, 19) are connected via lines (27) with controllable closures (28) to a supply device (20, 21, 22) and to a waste air device (16), wherein the regulating device (31) is connected to the detection device (30), the extraction devices (18, 19), the supply device(s) (20, 21, 22) and the closures (28).

## Revendications

1. Procédé de chauffage de produits céramiques à cuire (2), de préférence contenant de l'argile ou des granulats combustibles (5), avant la cuisson subséquente dans un four de cuisson (1) qui est divisé en plusieurs zones régulées en température de manière différente (8, 9, 10), l'énergie thermique pour chauffer les produits à cuire (2) étant obtenue dans une zone de chauffage (8) à partir d'un flux de gaz d'échappement (12) recirculé depuis une zone de cuisson (9) et à partir des granulats (5), et lors du chauffage, le comportement de combustion des granulats (5) étant détecté et le processus de chauffage étant régulé en conséquence.

2. Procédé selon la revendication 1, **caractérisé en ce que** le processus de chauffage est régulé en fonction d'une courbe de température prédéfinie (32) du produit à cuire (2).

3. Procédé selon la revendication 1 ou 2, **caractérisé en ce que** le processus de chauffage est régulé dans la zone de chauffage (8) en particulier dans une région partielle de la zone (11), par le biais d'une combustion contrôlée des granulats (5).

4. Procédé selon la revendication 1, 2 ou 3, **caractérisé en ce que** lors du processus de chauffage régulé, une partie des granulats (5) est brûlée, la partie non brûlée des granulats (5) étant brûlée à un stade ultérieur du processus, en particulier dans la zone de cuisson (9).

5. Procédé selon l'une quelconque des revendications précédentes, **caractérisé en ce que** le processus de chauffage est régulé dans la zone de chauffage (8), en particulier dans une région partielle de la zone (11), par le biais d'une commande de la teneur en oxygène s'y trouvant et/ou de la température y régnant.

6. Procédé selon l'une quelconque des revendications précédentes, **caractérisé en ce que** le processus de chauffage est régulé dans la zone de chauffage (8), en particulier dans une région partielle de la zone (11), par le biais d'une alimentation (20, 21) de gaz d'échappement (25, 26) à cet endroit, avec des teneurs en oxygène différentes et/ou avec des températures différentes.

7. Procédé selon l'une quelconque des revendications précédentes, **caractérisé en ce que** des gaz d'échappement (25, 26) régulés en température de manière différente sont aspirés à plusieurs endroits différents (18, 19), de préférence au début et à la fin de la zone de chauffage (8), en particulier d'une région partielle de la zone (11), les gaz d'échappement aspirés (25, 26) étant évacués et/ou étant acheminés (20, 21) entre les endroits d'aspiration (18, 19) dans la zone de chauffage (8), en particulier dans une région partielle de la zone (11).

8. Procédé selon l'une quelconque des revendications précédentes, **caractérisé en ce que** le comportement de combustion des granulats (5) est détecté lors du chauffage par détection de la température et/ou de la teneur en oxygène.

9. Procédé selon l'une quelconque des revendications précédentes, **caractérisé en ce que** lors du chauffage, l'air du four est circulé (23, 24) dans la direction axiale localement en un ou plusieurs endroits dans la zone de chauffage (8), en particulier dans une région partielle de la zone (11) .

10. Four de cuisson, en particulier four à tunnel, apte à mettre en oeuvre le procédé selon l'une quelconque des revendications 1 à 9, comprenant plusieurs zones régulées en température de manière différente (8, 9, 10), en particulier une zone de chauffage (8) et une zone de cuisson (9) disposée après elle, pour chauffer et cuire des produits céramiques à cuire (2) à cuire avec des granulats combustibles (5), l'énergie de chauffage pour chauffer les produits à cuire (2) dans la zone de chauffage (8) pouvant être obtenue à partir d'un flux de gaz d'échappement (12) recirculé de la zone de cuisson (9) et à partir des granulats (5), le four de cuisson (1) présentant dans la zone de chauffage (8) un dispositif de détection (30) pour détecter le comportement de combustion des granulats (5) lors du chauffage et un dispositif de régulation (31) pour réguler le processus de chauffage en fonction du résultat de la détection.

11. Four de cuisson selon la revendication 10, **caractérisé en ce que** le four de cuisson (1) présente, dans la zone de chauffage (8), plusieurs dispositifs d'aspiration (18, 19) espacés axialement pour des gaz d'échappement (25, 26) régulés en température de manière différente provenant du flux de gaz d'échappement recirculé (12), ainsi qu'un ou plusieurs dispositifs d'alimentation (20, 21, 22) pour les gaz d'échappement aspirés (25, 26) et éventuellement pour de l'air frais, pouvant être commandés et connectés à un dispositif d'aspiration (18, 19).

12. Four de cuisson selon la revendication 10 ou 11, **caractérisé en ce que** le four de cuisson (1) présente, dans la zone de chauffage (8), un ou plusieurs dispositifs de circulation (23, 24) agissant axialement, pouvant être commandés, qui est/sont raccordés à un dispositif d'alimentation (20, 21, 22).

13. Four de cuisson selon la revendication 10, 11 ou 12, **caractérisé en ce que** le dispositif de détection (30) et le ou les dispositifs d'alimentation (20, 21, 22) sont disposés dans une région partielle (11) de la zone de chauffage (8), en particulier avec une plage de températures allant jusqu'à environ 500°C, de préférence de 200 à 300°C.

14. Four de cuisson selon l'une quelconque des revendications 10 à 13, **caractérisé en ce que** le dispositif de détection (30) présente un dispositif de mesure pour la température et/ou la teneur en oxygène de l'air du four.

15. Four de cuisson selon l'une quelconque des revendications 10 à 14, **caractérisé en ce que** les dispositifs d'aspiration (18, 19) sont raccordés par le biais de conduites (27) ayant des fermetures commandables (28) à un dispositif d'alimentation (20, 21, 22) et à un dispositif de désaérage (16), le dispositif de régulation (31) étant raccordé au dispositif de détection (30), aux dispositifs d'aspiration (18, 19), au/aux dispositif(s) d'alimentation (20, 21, 22), et aux fermetures (28).
